Europäisches Patentamt

European Patent Office

Office européen des brevets

(19)

(11) Veröffentlichungsnummer : **0 009 676**
**B1**

(12) **EUROPÄISCHE PATENTSCHRIFT**

(45) Veröffentlichungstag der Patentschrift :
**23.12.81**

(51) Int. Cl.³ : **G 06 K 15/16, B 41 J 11/50**

(21) Anmeldenummer : **79103404.4**

(22) Anmeldetag : **12.09.79**

(54) **Transportvorrichtung für Aufzeichnungsträger in Druckern.**

(30) Priorität : **05.10.78 US 948860**

(43) Veröffentlichungstag der Anmeldung :
**16.04.80 (Patentblatt 80/08)**

(45) Bekanntmachung des Hinweises auf die Patenterteilung : **23.12.81 Patentblatt 81/51**

(84) Benannte Vertragsstaaten :
**DE FR GB**

(56) Entgegenhaltungen :
**DE - A1 - 2 717 758**
**DE - B - 1 761 289**
**US - A - 3 966 037**

(73) Patentinhaber : **International Business Machines Corporation**

**Armonk, N.Y. 10504 (US)**

(72) Erfinder : **Anderson, Theodore Howard**
**Rt. 1**
**Pine Island, MN 55963 (US)**
Erfinder : **Beuch, Wallace Eric**
**Rt. 2**
**Pine Island, MN 55963 (US)**
Erfinder : **Lagergren, Richard Edward**
**Rt. 1**
**Rochester, MN 55901 (US)**

(74) Vertreter : **Rudack, Günter O., Dipl.-Ing.**
**c/o International Business Machines Corporation**
**Zurich Patent Operations Säumerstrasse 4**
**CH-8803 Rüschlikon (CH)**

Transportvorrichtung für Aufzeichnungsträger in Druckern

Die Erfindung betrifft eine Transportvorrichtung für Aufzeichnungsträger in Druckern mit wenigstens einem von einer maschineninternen Vorratsspule gespendeten und entlang eines vorgegebenen Weges geführten Aufzeichnungsträger und mit einer Einführungsöffnung für einen externen Aufzeichnungsträger, und mit einem zum Bedrucken beider Aufzeichnungsträger vorgesehenen Druckwerk, mit einem reversierbaren Schrittmotor, der über Getriebemittel einerseits mit einer Antriebswelle in Wirkverbindung steht, auf welcher Antriebswelle wenigstens eine erste Antriebsrolle für den Transport des maschineninternen Aufzeichnungsträgers angeordnet ist, sowie andererseits mit einer zweiten Antriebsrolle für den externen Aufzeichnungsträger in Wirkverbindung steht, wobei der normalerweise wirksame Transport des internen Aufzeichnungsträgers zugunsten des Transports des externen Aufzeichnungsträgers unterbrochen werden kann.

Bei Bank- und Kassenterminals ist es oft erwünscht, ausser den von der Maschine für Buchhaltungszwecke erstellten Kontrollstreifen und den von der Maschine erstellten und dem Kunden abgegebenen Quittungsbelegen, Buchungen auch auf externen Dokumenten anzubringen. In der Vergangenheit wurden von Warenhäusern und Einzelhändlern Registrierkassen verwandt, um Verkäufe und ähnliche Transaktionen zu registrieren. Moderne Registrierkassen verfügen zu diesem Zweck über einen Kontrollstreifen sowie über einen Quittungsstreifen. Auf dem Kontrollstreifen werden sämtliche über die betreffende Registrierkasse abgewickelten Transaktionen für späteren Gebrauch durch Buchhaltung und Management aufgezeichnet. Auf dem Quittungsstreifen werden einzelne Transaktionen aufgezeichnet, wobei nach jeder Aufzeichnung ein entsprechendes Stück des Quittungsstreifens abgetrennt und dem Kunden ausgehändigt wird. Diese Quittungsabschnitte eignen sich jedoch nur für relativ unkomplizierte Geschäfte, bei denen die Aufzeichnung von Artikelnummern oder Kundennummern nicht erforderlich ist. Bei solchen Geschäften wurden bisher ein oder mehrere Dokumente von Hand ausgefüllt, entweder anstelle eines Registrierkassenberegs oder zusätzlich dazu.

Für die Aufzeichnung von Kunden-Transaktionen haben Kassenterminals die früheren Registrierkassen weitgehend verdrängt. Ein Grund liegt darin, dass mit dem Terminal eine wesentlich grössere und detailiertere Datenmenge bezüglich der Transaktionen erfasst werden kann als mit Registrierkassen. Ferner können die bisher manuell ausgeführten Operationen auch für komplizierte Transaktionen weitgehend automatisiert und vereinfacht werden.

Während einige bekannte Terminals für alle Arten von Geschäften den gleichen Beleg erstellen, ist es wünschenswert, beispielsweise für Barverkäufe den traditionellen Kassenabschnitt zu erstellen, bei Verkäufen mit Belastung eines laufenden Kundenkontos jedoch ein anderes Dokument. Ferner sollte es auch möglich sein, eine Buchung auf einem vom Kunden an Zahlungs Statt gegebenen Dokument vorzunehmen. Es wäre selbstverständlich möglich, für jede vom Kassenterminal akzeptierte Art Dokument eine eigene Druckstation vorzusehen. Dadurch würden die Terminals jedoch sehr teuer, umständlich zu handhaben und störanfällig.

Die vorliegende Erfindung kann beispielsweise in einem Kassenterminal Anwendung finden, in welchem alle auf verschiedenen Aufzeichnungsträgern anzubringenden Buchungen vom gleichen Druckwerk gedruckt werden. Dabei ist vorgesehen, dass ein maschineninterner Quittungsstreifen senkrecht zur Drucklinie transportiert werden kann, sofern nicht der Transportmechanismus durch ein externes Dokument auf den exklusiven Transport des letzteren umgeschaltet worden ist. Das Vorhandensein oder Fehlen eines externen Dokumentes in der sogenannten « Dokument »-Zone wird durch Detektoren festgestellt, deren Ausgangssignale zur Steuerung der Transportvorrichtung herangezogen werden.

Der Stand der Technik ist am besten ersichtlich aus der USA Patentschrift 3,966,037. Die in dieser Patentschrift beschriebene Buchhaltungsmaschine ist mit zwei Druckstationen für endlose Papierstreifen ausgerüstet und weist eine Vorsteckeinrichtung auf, in welche Karten zum Bedrucken an einer der Druckstationen eingeführt werden können. Im Unterschied zur vorliegenden Erfindung sind unabhängige Transportvorrichtungen für die kontinuierlichen Streifen sowie für die vorsteckbaren Karten vorgesehen.

In der USA-Patentschrift 4,074,797 ist ein mit nur einem Druckwerk bestückter Drucker beschrieben, in welchem zwei Aufzeichnungsträger unterschiedlicher Breite von einer ersten Transportvorrichtung selektiv angetrieben werden, wobei die den Aufzeichnungsträgern zugeordneten Reibrollen untereinander unterschiedliche, der Aufzeichnungsträgerbreite angepasste Abstände aufweisen. In diesem Drucker ist ferner eine weitere Transportvorrichtung für einen dritten Aufzeichnungsträger vorgesehen, dessen Transportrichtung derjenigen der beiden ersten Aufzeichnungsträger entgegengesetzt ist. Der Antrieb der Transportvorrichtungen erfolgt durch einen reversierbaren Schrittmotor, der über Getriebemittel mit den Antriebsrollen für sämtliche Aufzeichnungsträger in Wirkverbindung ist. Durch elektromagnetische Mittel können die Transportvorrichtungen wahlweise unwirksam gemacht werden.

Der vorliegenden Erfindung, wie sie in den Ansprüchen gekennzeichnet ist, liegt die Aufgabe zugrunde, eine Transportvorrichtung für Drucker der eingangs beschriebenen Art zu schaffen, bei der die Umschaltung der dem internen bzw.

externen Aufzeichnungsträger zugeordneten transportwirksamen Elemente automatisch durch den externen Aufzeichnungsträger erfolgt.

Einzelheiten eines Ausführungsbeispiels der vorliegenden Erfindung werden in der nachfolgenden Beschreibung unter Bezugnahme auf die Zeichnungen erläutert. In den Zeichnungen zeigen :

Fig. 1 eine perspektivische Ansicht eines Druckers mit einem zwei Druckstationen bedienenden Druckwerk ;

Fig. 2 eine schematisierte Seitenansicht des Drukkers gemäss Fig. 1 ;

Fig. 3 eine perspektivische Ansicht einer Aufzeichnungsträger-Transportvorrichtung ;

Fig. 4 eine Frontalansicht der Antriebswelle gemäss Fig. 3 ;

Fig. 5 die Anordnung der Detektoren ;

Fig. 6 ein Prinzipschaltbild der Motorsteuerung ;

Fig. 7 eine weitere Ansicht eines Teils des Druckers gemäss Fig. 1.

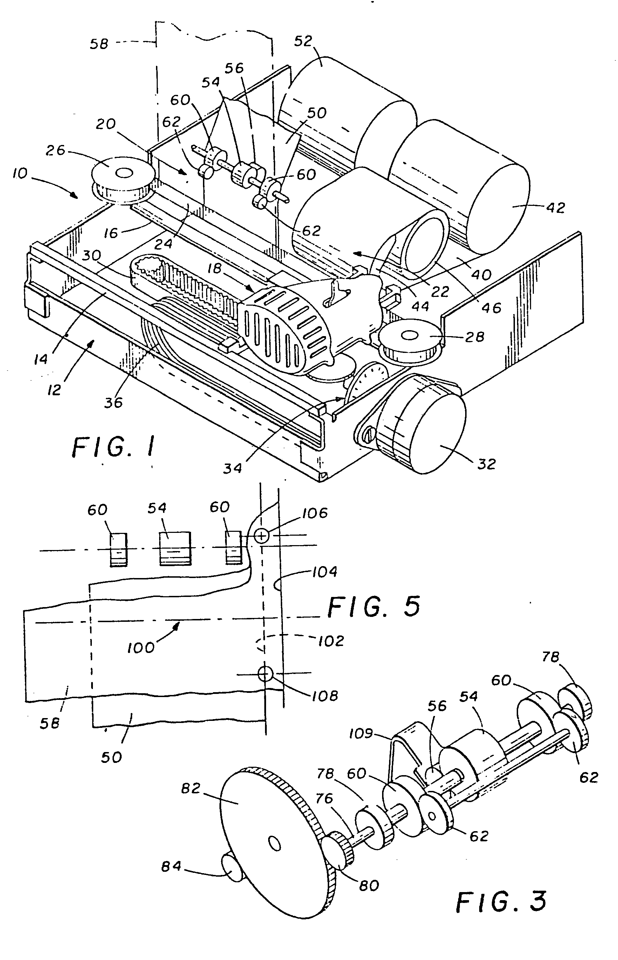

Fig. 1 zeigt einen Drucker 10 mit zwei Aufzeichnungsträger-Transportvorrichtungen, die einem gemeinsamen Druckwerk zugeordnet sind. Der nur teilweise gezeigte Rahmen 12 des Druckers 10 weist eine Vierkantschiene 14 und eine zylindrische Schiene 16 auf, auf denen ein Druckkopf 18 für laterale Bewegung innerhalb des Rahmens 12 geführt ist.

Im Zusammenhang mit der vorliegenden Erfindung kann praktisch jedes konventionelle Druckwerk benutzt werden. Der in Fig. 1 dargestellte Druckkopf 18 ist beispielsweise mit einem Punktmatrixdruckwerk ausgerüstet, welches lateral im Drucker verschoben werden kann, um sowohl in einem in Fig. 1 links gelegenen Druckbereich 20 als auch in einem rechts gelegenen Druckbereich 22 drucken zu können. Ein Farbband 24 erstreckt sich zwischen Farbbandspulen 26 und 28, die seitlich im Rahmen 12 des Druckers gelagert sind, so dass das Farbband 24 von den im Druckkopf 18 vorgesehenen Drähten des Matrix-Druckwerks auf den den Druckbereichen 20 und 22 zugeordneten Aufzeichnungsträgern abgedruckt werden kann.

Die Positionierung des Druckkopfes 18 erfolgt durch einen Zahnriemen 30, der durch einen im Rahmen 12 gelagerten Motor 32 angetrieben wird. Information bezüglich der Stellung des Druckkopfes wird mittels einer Scheibe 34 erzeugt und einer konventionellen logischen Schaltung zugeführt. Der Druckkopf 18 wird über ein Flachbandkabel 36 betätigt, welches an die logische Schaltung angeschlossen ist.

Der Drucker 10 kann beispielsweise in einem Kassenterminal eingesetzt werden. Dabei sei der rechte Druckbereich 22 für die Erstellung des Kontrollstreifens vorgesehen. Ein Papierstreifen 40 erstreckt sich von einer Vorratsrolle 42 um ein Druckwiderloger 44 zu einer Aufnahmespule 46. Der Druckkopf 18 zeichnet auf dem Papierstreifen 40 jede Operation des Kassenterminals auf und erstellt auf diese Weise einen Kontrollstreifen. Von Zeit zu Zeit, beispielsweise am Ende jeder Schicht, kann der Kontrollstreifen von der Aufnahmespule 46 entfernt und dem Buchhaltungs- bzw. Managementpersonal übergeben werden.

Bei der genannten Kassenterminal-Anwendung des Drukkers 10 kann der linke Druckbereich 20 der Erstellung der Kassenquittungen zugeordnet werden. Ein Papierstreifen 50 erstreckt sich von einer Vorratsrolle 52 um das Druckwiderloger 44 und läuft zwischen einer Antriebsrolle 54 und einer Druckrolle 56 durch. Gewisse Arten von mittels des Kassenterminals durchgeführten Transaktionen, wie beispielsweise die Einnahme und Ausgabe von Bargeld, werden auf dem Papierstreifen 50 in Form einer Quittung aufgezeichnet. Im Gegensatz zum Kontrollstreifen 40 wird der Quittungsstreifen nicht auf einer Aufnahmespule aufgewickelt. Statt dessen werden aufeinanderfolgende Abschnitte des Streifens 50, welche die Daten einer bestimmten Transaktion tragen, abgetrennt und dem Kunden übergeben.

In dem in Fig. 1 links dargestellten Druckbereich 20 können ausser den Quittungsabschnitten auch andere Dokumente 58 erstellt werden. Diese Dokumente können Belastungsanzeigen, Checks oder andere Papiere umfassen, die an Zahlungs Statt angenommen werden.

Ein derartiges Dokument 58 kann entweder von unten oder von der Seite in den linken Druckbereich 20 eingeführt werden, d.h. von links nach rechts in Fig. 1, und wird dann zwischen den Antriebsrollen 60 und den Druckrollen 62 aufgenommen. Wenn das Dokument 58 ordnungsgemäss im Druckbereich 20 ausgerichtet ist, erfolgt das Drucken durch den Druckkopf 18 auf dem Dokument 58 anstatt auf dem Papierstreifen 50.

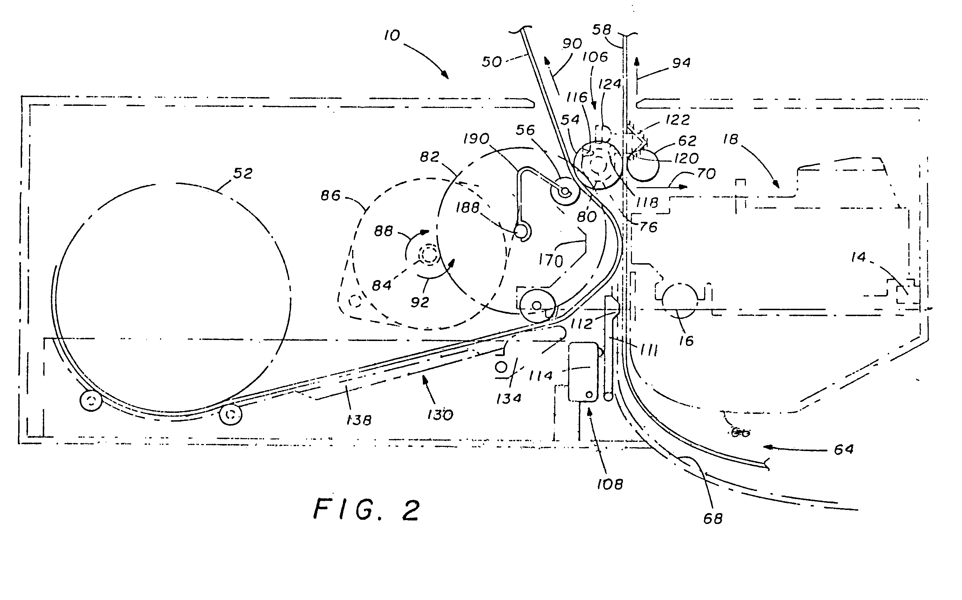

In Fig. 2 ist die Positionierung des Papierstreifens 50 sowie des Dokumentes 58 bezüglich der Walze 44 und des Druckkopfes 18 im Detail gezeigt. Das Dokument 58 kann durch einen mittels der Wände 66 und 68 definierten Kanal 64 nach aufwärts eingeführt werden. Im Sinne einer Alternativlösung können die Druckrollen 62 in Richtung des Pfeils 70 nach auswärts geschwenkt werden und gestatten auf diese Weise die laterale Einführung des Dokumentes 58. Wenn dieses ordnungsgemäss eingeführt ist, überdeckt es den Papierstreifen 50 und kann vom Druckkopf 18 bedruckt werden.

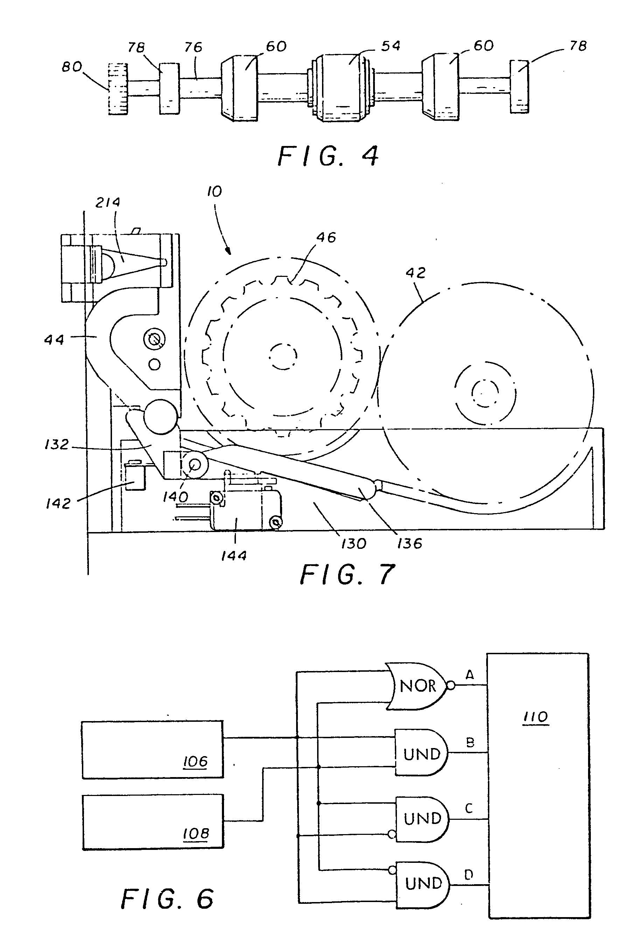

Aus den Fign. 3 und 4 im Zusammenhang mit Fig. 2 ist ersichtlich, dass die Antriebsrollen 54 und 60 auf einer gemeinsamen Antriebswelle 76 montiert sind. Die Welle 76 ist drehbar in Hülsen 78 gelagert und endet in einem Zahnrad 80, welches mit einem weiteren Zahnrad 82 in Eingriff ist. Das Zahnrad 82 ist seinerseits in Eingriff mit einem Ritzel 84, das von einem Schrittmotor 86 angetrieben wird.

Die Antriebsrolle 54 weist eine Freilaufkupplung auf. Bei Betätigung des Schrittmotors 86 und dadurch erfolgender Drehung des Ritzels 84 im Uhrzeigersinn, wie durch den Pfeil 88 in Fig. 2 angedeutet, bewirkt die Antriebsrolle 54 in Zusammenarbeit mit der Druckrolle 56 die Bewegung des Papierstreifens 50 aufwärts in Richtung des Pfeils 90. Wenn dagegen der Schrittmotor 86 betätigt wird und das Ritzel 84 sowie die Antriebswelle 76 entgegen dem Uhrzeigersinn dreht, wie das der Pfeil 92 in Fig. 2 andeutet, bleibt die Antriebsrolle 54 stehen, und die Antriebsrollen 60 fördern zusammen mit den Druckrollen 62 das Dokument 58 aufwärts in Richtung des Pfeils 94.

Gemäss den Fign. 1 und 5 erfolgt das Drucken mittels des Druckkopfes 18 und des Farbbandes 24 entlang einer Drucklinie 100. Die Antriebsrolle 54 bewegt den Papierstreifen durch eine « Streifen »-Zone, die durch die Kante 102 begrenzt ist und sich quer zur Drucklinie 100 erstreckt, welche in ihr liegt. Das Dokument 58 wird mittels der Antriebsrollen 60 durch eine « Dokument »-Zone transportiert, welche durch eine rechts liegende Kante 104 begrenzt ist. Auch diese Zone erstreckt sich quer zu der in ihr liegenden Drucklinie 100. Obwohl das Dokument 58 sich beidseits über die Breite des Streifens 50 erstreckt, kann der Druckkopf 18 in der hier beschriebenen Maschine normalerweise nur innerhalb der Breite des Bandes 50 einen Abdruck erzeugen.

Ein obenliegender Detektor 106 und ein untenliegender Detektor 108 sind für die Feststellung des Vorhandenseins eines Dokumentes in der « Dokument »-Zone vorgesehen. Die Detektoren 106 und 108 sind innerhalb der « Dokument »-Zone auf gegenüberliegenden Seiten der Drucklinie 100 angeordnet. Der Quittungsstreifen 50 passiert teilweise unterhalb beider Detektoren, doch können die Detektoren die « Streifen »-Zone auch ganz oder aber gar nicht überdecken.

Wenn die Detektoren 106 und 108 anzeigen, dass ein Dokument 58 innerhalb der « Dokument »-Zone vorhanden ist, wird der Schrittmotor 86 eingeschaltet, welcher die Antriebswelle 76 entgegen dem Uhrzeigersinn dreht, so dass die Antriebsrollen 60 und die Druckrollen 62 das Dokument 58 vorwärts transportieren. Wenn die Detektoren 106 und 108 jedoch kein Dokument in der « Dokument »-Zone feststellen, treibt der Schrittmotor 86 die Antriebswelle 76 im Uhrzeigersinn an, so dass die Antriebsrolle 54 und die Druckrolle 56 den Papierstreifen 50 in der « Streifen »-Zone transportieren.

Gemäss Fig. 6 sind die Detektoren 106 und 108 an eine logische Schaltung angeschlossen, welche verschiedene Ausgangssignale an eine konventionelle Motor-Steuerschaltung 110 liefert. Wenn keiner der Detektoren das Vorhandensein eines Dokumentes in der « Dokument »-Zone feststellt, wird das Ausgangssignal A erzeugt. Dieses veranlasst den Schrittmotor 86 zum Antrieb der Welle 76 im Uhrzeigersinn, so dass die Antriebsrolle 54 und die Druckrolle 56 den Papierstreifen 50 transportieren. Das Ausgangssignal A ist daher gültig im Falle einer Transaktion, welche das Drucken eines Quittungsbeleges verlangt und ist ungültig im Fall einer Transaktion, bei welcher auf das alternative Dokument gedruckt werden muss. In den Fällen, in welchen beide Detektoren 106 und 108 das Vorhandensein eines Dokumentes 58 feststellen, wird das Ausgangssignal B erzeugt. Dieses veranlasst den Schrittmotor 86, die Welle 76 entgegen dem Uhrzeigersinn zu drehen, so dass die Antriebsrollen 60 und die Druckrollen 62 das alternative Dokument durch die « Dokument »-Zone transportieren. Das Ausgangssignal B ist daher gültig in den Fällen, in welchen die Transaktion einen Druck auf das Dokument 58 verlangt und ist ungültig in den Fällen, in welchen die Transaktion das Drucken eines Quittungsbeleges verlangt.

Wenn ein Dokument 58 nach aufwärts in den Kanal 64 eingeführt wird, erkennt der Detektor 108 die Oberkante des Dokumentes, worauf das Ausgangssignal C erzeugt wird, welches den Schrittmotor 86 in der Richtung entgegen dem Uhrzeigersinn dreht. Beim weiteren Einführen des Dokumentes wird dieses durch die Rollen 60 und 62 erfasst und weiter transportiert, bis es durch den Detektor 106 erkannt wird. Wenn die untere Kante des Dokumentes 58 den unteren Detektor 108 passiert hat, setzt das Ausgangssignal D den Transport des Dokumentes solange fort, bis dieses vollständig ausgeworfen ist. Während des Druckes auf ein Dokument 58 werden die Ausgangssignale C und D auch dazu benutzt, fehlerhafte Zustände anzuzeigen, wie beispielsweise das Schräglaufen des Dokuments.

Wie Fig. 2 zeigt, umfasst der untere Detektor 108 einen schwenkbar gelagerten Hebel 111, dessen Schulter 112 in die « Dokument »-Zone hineinragt. Die Schulter 112 weist nach unten und links abgeschrägte Kanten auf, so dass sie gleichermassen durch ein von unten in den Kanal 64 oder seitlich von links nach rechts eingeführtes Dokument 58 betätigt werden kann. Beim Verschwenken betätigt der Hebel 111 einen Schalter 114, dessen Schaltzustand das Vorhandensein oder Fehlen eines Dokumentes 58 in der « Dokument »-Zone anzeigt.

Der obere Detektor 106 umfasst eine Lichtquelle 116, eine Linse 118, ein Paar Spiegel 120 und 122 sowie ein lichtempfindliches Element 124. Die Lichtquelle 116, die Linse 118 und die Spiegel 120 und 122 bilden eine Lichtschranke quer zur « Dokument »-Zone, so dass das Ausgangssignal des lichtempfindlichen Elements 124 das Vorhandensein bzw. Fehlen eines Dokumentes innerhalb der Zone anzeigt.

Wie die Fign. 2 und 7 zeigen, enthält der Drucker 10 eine Vorrichtung 130 dür die Anzeige des Zustandes des Papiers auf den Rollen 42, 46 und 52.

Die Vorrichtung 130 umfasst Hebel 132, 134, 136 und 138, welche gemeinsam auf einer Welle 140 schwenkbar gelagert sind. Die Masse dieser Hebel ist durch ein Gegengewicht 142 ausbalanciert. Bei Betätigung schalten die Hebel 132, 134, 136 und 138 einen Schalter 144, welcher zur Beendigung der Operation des Druckers 10 dient, wenn entweder die Vorratsrollen 42 bzw. 52 leer sind, oder wenn die Aufnahmespule 46 für den Kontrollstreifen voll ist.

## Ansprüche

1. Transportvorrichtung für Aufzeichnungsträ-

ger in Druckern mit wenigstens einer von einer maschineninternen Vorratsspule (42, 52) gespendeten und entlang eines vorgegebenen Weges geführten Aufzeichnungsträger und mit einer Einführungsöffnung für einen externen Aufzeichnungsträger ; mit einem zum Bedrucken beider Aufzeichnungsträger vorgesehenen Druckwerk ; mit einem reversierbaren Schrittmotor (86), der über Getriebemittel einerseits mit einer Anstriebswelle (76) in Wirkverbindung steht, auf welcher Antriebswelle wenigstens eine erste Antriebsrolle (54) für den Transport des maschineninternen Aufzeichnungsträgers angeordnet ist, sowie andererseits mit einer zweiten Antriebsrolle (60) für den externen Aufzeichnungsträger in Wirkverbindung steht, wobei der normalerweise wirksame Transport des internen Aufzeichnungsträgers zugunsten des Transports des externen Aufzeichnungsträgers unterbrochen werden kann, gekennzeichnet durch wenigstens einen im Transportweg (64, 94) des externen Aufzeichnungsträgers (58) angeordneten Fühler (106, 108), welcher den reversierbaren Schrittmotor (86) ansteuert, und bei Feststellung eines externen Aufzeichnungsträgers (58) die Reversierung des Motors (86) und damit der Antriebswelle (76) bewirkt, wodurch der Transport des internen Aufzeichnungsträgers (50) zugunsten des Transports des externen Aufzeichnungsträgers (58) unterbrochen wird, indem eine in die dem Transport des internen Aufzeichnungsträgers (50) zugeordnete Antriebsrolle (54) eingebaute Freilaufkupplung die Antriebsrolle (54) von der Antriebswelle (76) abkuppelt, so dass der Transport des externen Aufzeichnungsträgers (58) mittels der drehfest mit der Antriebswelle (76) verbundenen Antriebsrollen (60) und mit diesen zusammenwirkenden Druckrollen (62) erfolgt.

2. Transportvorrichtung nach Patentanspruch 1, dadurch gekennzeichnet, dass ein durch Wände (66, 68) gebildeter Kanal (64) zur Einführung des externen Aufzeichnungsträgers (58) von unten in den Drucker (10) vorgesehen ist.

3. Transportvorrichtung nach Patentanspruch 1, dadurch gekennzeichnet, dass der Fühler (108) als von einem schwenkbar gelagerten Hebel (111) betätigbarer Schalter (114) ausgebildet ist, und dass der Hebel (111) wenigstens an der Seite, an welcher der externe Aufzeichnungsträger (58) aufläuft, eine abgeschrägte Schulter (112) aufweist.

4. Transportvorrichtung nach Patentanspruch 1, dadurch gekennzeichnet, dass der Fühler (106) als optische Schranke mit Lichtquelle (116) und Photodetektor (118) ausgebildet ist.

5. Transportvorrichtung nach Patentanspruch 1, dadurch gekennzeichnet, dass jeder Antriebsrolle (54) für den internen Aufzeichnungsträger (50) eine durch Federkraft (190) ständig angedrückte Druckrolle (56) zugeordnet ist, und dass der Aufzeichnungsträger (50) zwischen den Rollen (54, 56) durch Reibung transportiert wird.

6. Transportvorrichtung nach Patentanspruch 1, dadurch gekennzeichnet, dass der durch die Einführöffnung (66, 68) definierte Transportweg (64, 94) des externen Aufzeichnungsträgers (58) zwischen dem Druckwerk (18) und dem über ein Druckwiderlager (170) geführten internen Aufzeichnungsträger (50) verläuft, wobei ein gegebenenfalls vorhandenes Farbband (24) einen Teil des Druckwerks (18) bildet.

**Claims**

1. Document advancing mechanism in printers with at least one document supplied from a supply spool (42, 52) internal of the machine and guided along a predetermined path, and with an entrance opening for an external document ; with a printing mechanism for printing on both documents ; with a reversible stepper motor (86) which via gear means is in driving connection on the one hand with a drive shaft (76) on which there is at least a first drive roller (54) for advancing the internal document, and on the other hand with a second drive roller (60) for the external document, whereby the normally active advancement of the internal document can be interrupted in favour of the advancement of the external document, characterized by at least one document detector (106, 108) arranged in the path (64, 94) of the external document (58), which detector controls the reversible stepper motor (86), and, upon detection of an external document, causes the reversal of that motor (86) and at the same time of the drive shaft (76), to interrupt the advancement of the internal document (50) in favour of the advancement of the external document (58) by decoupling the drive roller (54) associated with the advancement of the internal documents (50) from the drive shaft (76) by means of a one-way clutch arranged inside the drive roller (54), so that the advancement of the external document (58) is performed by means of the drive rollers (60) rigidly connected to the drive shaft (76), and by pressure rollers (62) cooperating with said drive rollers (60).

2. Document advancing mechanism according to claim 1, characterized in that a channel (64) formed by walls (66, 68) is provided for insertion of the external document (58) into the printer (10) from below.

3. Document advancing mechanism according to claim 1, characterized in that the document detector (108) takes the form of a switch (114) actuable by a pivotally supported lever (111), and that the lever (111) has an inclined shoulder (112) at least on the side on which it is struck by the external document (58).

4. Document advancing mechanism according to claim 1, characterized in that the document detector (106) is designed as an optical threshold device comprising a light source (116) and a photodetector (118).

5. Document advancing mechanism according to claim 1, characterized in that each drive roller (54) for the internal document has an associated pressure roller (56) continuously kept in contact with it by spring means (190), and that the document (50) is advanced between the rollers (54, 56) by friction.

6. Document advancing mechanism according to claim 1, characterized in that the transport path (64, 94) of the external document (58) as defined by the entrance opening (66, 68) extends between the printing mechanism (18) and the internal document (50) guided past a platen (170), any possibly present ink ribbon (24) forming a part of the printing mechanism (18).

**Revendications**

1. Mécanisme d'avancement de documents pour une imprimante dans laquelle au moins un document. est alimenté depuis une bobine d'alimentation (42, 52) logée à l'intérieur de la machine et guidé sur un chemin prédéterminé, et qui comporte une entrée pour un document extérieur, un dispositif d'impression des deux documents, un moteur pas-à-pas réversible (86) qui, par l'intermédiaire d'engrenages d'une part entraîne un arbre (76) sur lequel est monté au moins un premier galet d'entraînement (54) pour avancer le document intérieur et qui, d'autre part, entraîne un deuxième galet d'entraînement (60) du document extérieur, ce qui permet l'interruption de l'avancement normalement actif du document intérieur au bénéfice de l'avancement du document extérieur, ledit mécanisme d'avancement de documents étant caractérisé en ce qu'il comporte au moins un détecteur de documents (106, 108) disposé sur le chemin (64, 94) du document extérieur (58) et commandant le moteur pas-à-pas réversible (86) et qui, à la détection d'un document extérieur, provoque l'inversion du mouvement du moteur (86) et en même temps de l'arbre (76), afin d'interrompre l'avancement du document intérieur (50) au bénéfice de l'avancement du document extérieur (58), en couplant le galet d'entraînement (54), associé à l'avancement des documents intérieurs (50), de l'arbre (76) au moyen d'un embrayage monodirectionnel disposé à l'intérieur du galet d'entraînement (54), de façon que l'avancement du document extérieur (58) soit exécuté au moyen de galets d'entraînement (60) solidaires de l'arbre (76), et de galets presseurs (62) associés auxdits galets d'entraînement (60).

2. Mécanisme selon la revendication 1 caractérisé en ce qu'un canal (64) formé par des parois (66, 68), est prévu pour l'introduction du document extérieur (58) dans l'imprimante (10) par le bas de celle-ci.

3. Mécanisme selon la revendication 1 caractérisé en ce que le détecteur de documents (108) se présente sous la forme d'un commutateur (114) commandé par un levier pivotant (111) et en ce que ledit levier (111) présente un épaulement biseauté (112) au moins du côté où il entre en contact avec le document extérieur (58).

4. Mécanisme selon la revendication 1 caractérisé en ce que le détecteur de documents (106) est conçu comme un dispositif à seuil optique comprenant une source lumineuse (116) et un photodétecteur (118).

5. Mécanisme selon la revendication 1 caractérisé en ce que chaque galet d'entraînement (54) du document intérieur comporte un galet presseur associé (56) maintenu en contact permanent avec ledit galet d'entraînement (54) par un ressort (190) et en ce que le document (50) est avancé par friction entre les galets (54, 56).

6. Mécanisme selon la revendication 1 caractérisé en ce que le chemin (64, 94) du document extérieur (58) tel que défini par les parois (66, 68) s'étend entre le mécanisme d'impression (18) et le document intérieur (50) guidé devant une platine (170), un ruban (24) faisant éventuellement partie du mécanisme d'impression (18).

FIG. 1

FIG. 5

FIG. 3

1

FIG. 2

# 0 009 676

FIG. 4

FIG. 7

FIG. 6